# EUROPEAN PATENT SPECIFICATION

(11) **EP 2 588 328 B1**
(45) Date of publication and mention of the grant of the patent: **31.05.2017**
(21) Application number: 11745825.7
(22) Date of filing: 28.06.2011
(51) Int. Cl.: B60C 11/04, B60C 11/12

(54) **TYRE FOR HEAVY LOAD VEHICLE WHEELS**
REIFEN FÜR SCHWERLASTFAHRZEUGRÄDER
PNEU POUR DES ROUES DE VÉHICULE DE TRANSPORT DE CHARGE LOURDE

(30) Priority: 30.09.2010 US 388109 P; 30.06.2010 IT RM20100353
(43) Date of publication of application: 08.05.2013
(73) Proprietor: Pirelli Tyre S.p.A., 20126 Milano (IT)
(72) Inventor: CASTELLINI, Alessandro, I-20126 Milano (IT)
(74) Representative: Fabiano, Piero
(86) International application number: PCT/IB2011/001501
(87) International publication number: WO 2012/001488

(56) References cited:
- US-A- 6 003 575
- US-A1- 2007 187 014
- US-A1- 2009 038 723

## Description

### FIELD OF THE INVENTION

The present invention relates to a tyre for vehicle wheels, particularly for heavy load vehicle wheels.

### PRIOR ART

In the technical filed of tyres, documents WO2009/077808, US2007/0187014, JP2000-025419 refer particularly to tyres for heavy load vehicle wheels.

A tyre corresponding with the preamble of claim 1 is known from WO 03/006266 A1.

### SUMMARY OF THE INVENTION

Tyres intended for use with heavy load vehicles are typically required to have excellent traction, directionality and controllability features.

A further feature required of this kind of tyres is a reduced and/or as far as possible uniform wear, so as to increase the tyre performances as to mileage and reduce running noise and vibrations.

The above-mentioned features are partially conflicting with one another. In particular, according to the Applicant's experience, it is very difficult to ensure excellent tyre performances as to traction, road holding both on dry and wet grounds, controllability and directionality without in some way affecting the tyre performances as to wear, mileage and running noise/vibrations.

In particular, tyres intended for use with heavy load vehicles of class H, characterised by a large use on asphalt roads, are required to have low rolling resistance and wear evenness.

The Applicant has observed that, in order to reduce the rolling resistance and provide wear evenness particularly in tyres for heavy load vehicles intended for use on motorways and/or regional roads, it is convenient to limit the width of the transverse grooves separating the blocks, so as to increase the "amount of rubber to the ground".

The Applicant has further observed that, in order to obtain in any case good traction and water draining features on wet grounds in a tread intended for this kind of vehicles, it is convenient to use transverse sipes having high depth and a profile that allows a suitable mutual meshing of the adjacent blocks and adequate opening and closing of the sipe at the tyre footprint area.

However, the Applicant has observed that a large number of deep transverse sipes having a shape such that portions for mutual meshing are defined in adjacent blocks, although on the one hand advantageous for improving the tyre performances as to traction, pickup and lateral stability, on the other hand may cause, beside a worsening of the tyre performances as to the mileage, excessive and/or uneven wear phenomena in the tread band as well as disturbing vibrations and noise.

The Applicant believes that the arising of excessive and/or uneven wear phenomena in the tread band, as well as of disturbing vibrations and noise, is caused to a non-negligible extent by the continuous mutual rubbing of the walls of the adjacent blocks during the opening and closing of the transverse sipes respectively while entering in or leaving the tyre footprint area.

The Applicant has found that the reciprocally contrasting problems discussed above can be overcome by means of a tread pattern comprising in the central region at least one row of blocks circumferentially separated by preferably deep sipes, and wherein the blocks are provided with at least one first deformation, adapted to define in adjacent blocks respective portions of mutual constraint, and with a further deformation grafted on the first deformation in the circumferential direction.

The further deformation counteracts the mutual sliding of the blocks in the circumferential direction without hindering the mutual opening and closing movement. The traction is thus preserved and the wear evenness is improved thanks to the mutual constraint in the radial direction of the adjacent blocks, which reduces the misalignment of the radially outer surfaces thereof during rolling and while the radially outer surface passes in the footprint area.

More particularly, according to a first aspect thereof, the present invention relates to a tyre having a tread comprising a central annular portion astride an equatorial plane and two shoulder annular portions, located on axially opposite sides with respect to the central annular portion, the central annular portion being separated from each shoulder annular portion by a respective first circumferential groove.

Preferably, the central annular portion may comprise a plurality of blocks, arranged in at least one circumferential row comprised between two circumferential grooves, and at least one transverse sipe adapted to separate two circumferentially adjacent blocks.

Preferably, each block is thus circumferentially delimited, by means of two consecutive sipes, by two opposite walls extending with a substantially transverse course with respect to the equatorial plane of the tyre and with a substantially radial course from the bottom of the sipe to the radially outermost surface of the block.

Preferably, on at least one of the opposite transverse walls of a block at least one first deformation is present which is adapted to define together with at least one adjacent block first portions of mutual constraint.

By the expression "first deformation" it is meant a substantial deviation (for example a projection or a recess) with respect to the substantially transverse course of the wall of the block.

The first deformation present on a first block defines a first constraint with a corresponding first deformation present on the facing wall of a second block circumferentially adjacent to the first block. The first constraint acts at least in a circumferential direction. In other words, such a first constraint tends to hinder a separation in the circumferential direction of the first and the second block.

Preferably, on at least one of the opposite transverse walls of a block at least one second deformation is present which is adapted to define together with at least one adjacent block second portions of mutual constraint.

By the expression "second deformation" it is meant a substantial deviation (for example a projection or a recess) with respect to the substantially radial course of the wall of the block.

The second deformation present on a first block defines a second constraint with a corresponding second deformation present on the facing wall of a second block circumferentially adjacent to the first block. The second constraint acts at least in a radial direction. In other words, such a second constraint tends to hinder the mutual sliding in the radial direction of the facing walls of the first and the second block.

Preferably, the second deformation extends at least on the first deformation so that the first and second deformations are at the same wall portion of the block. The second deformation extends axially so as to follow a course located at different radial depths of the sipe. The second deformation extends axially in a range comprised between about 30% and 80% of the transverse wall of the block. Within the framework of the present invention, the following definitions apply:
- By "sipe" it is meant a thin groove, for example a groove having a width not greater than 3 mm.
- By "width" of a deformation it is meant the maximum extension of the deformation measured in the same direction of the course of the wall under consideration. In other words, the width of the first deformation corresponds to the maximum extension of the first deformation in the transverse direction, whereas the width of the second deformation corresponds to the maximum extension of the second deformation in the radial direction.
- By "depth" of a deformation it is meant the maximum extension of the deformation measured in a direction perpendicular to the course of the wall under consideration. In other words, the depth of the first deformation and/or of the second deformation corresponds to the maximum extension of the first and/or, respectively, the second deformation in a substantially circumferential direction.
- By "ridge" of a deformation it is meant the portion of the deformation which is furthest from the surface from which the same deformation arises. Such a surface may correspond to the wall of the block or to the surface of a deformation on which a further deformation is grafted.
- By "equatorial plane" of the tyre it is meant a plane perpendicular to the rotation axis of the tyre and dividing the tyre into two symmetrically equal portions.
- By "circumferential" direction it is meant a direction generically directed according to the rotation direction of the tyre, or in any case only slightly inclined with respect to the rotation direction of the tyre.
- By "axial direction" or "axially" it is meant a direction parallel to, or in any case only slightly inclined with respect to the rotation axis of the tyre.
- By "radial" or "radially" it is meant a direction substantially orthogonal to the rotation axis of the tyre.

Furthermore, within the framework of the present description, the width of the circumferential groovees and/or of the sipes may be detected taking the width of the radially outer edges of the same grooves and/or sipes as a reference.

Preferably, the first deformation may have a width smaller than the total extension of the substantially transverse wall.

Preferably, the second deformation may have a width less than 30% of the maximum depth of the transverse sipe.

In the Applicant's view, such a choice represents a proper trade-off between the need to provide a constraint to the mutual sliding of opposite faces of two adjacent blocks in the radial direction, while entering in and leaving the footprint area, and the contrasting need to avoid excessively hindering the mobility of the blocks.

Advantageously, the second deformation comprises at least one ridge.

Preferably, in an axially central portion of the wall of the block, the ridge of the second deformation may be located in a radially outer position with respect to the half of the maximum radial depth of the sipe. As an example, said axially central portion of the block may have an axial extension equal to about 20% of the axial extension of the whole transverse wall of the block.

Even more preferably, in said axially central portion of the wall of the block, the ridge of the second deformation may be located at a radial depth less than 40% of the maximum depth of the sipe.

Preferably, outside said axially central portion of the wall of the block, the ridge of the second deformation may be located at a radial depth comprised between 30% and 70% of the maximum depth of the sipe.

The Applicant has found that the choice of such a course of the second deformation, particularly of the ridge thereof, improves the interaction between the walls of the central adjacent blocks in the footprint area. In fact, on the one hand a greater constraint effect between the facing transverse walls of the adjacent blocks is provided in the central region of the wall, where such engagement is more required for preventing an excessive opening of the sipe. On the other hand, other regions where the synergistic effect with the first deformation already provides an effective constraint, or regions where excessively hindering the sliding of the adjacent blocks would cause a decay of the tyre performances, are left freer.

Conveniently, the second deformation may have a variable width along its course.

Advantageously, the second deformation may have a variable depth along its course.

Preferably, the depth of the second deformation may be greater at the axially central portion of the transverse wall of the block, compared to the depth of the second deformation at the axially outermost portions.

Preferably, the first deformation may have a flat surface portion.

In an embodiment, the ridge of the second deformation is defined by at least two inclined portions opposed to each other so as to form substantially a vertex.

Conveniently, the second deformation extends axially over the whole extension of the flat surface portion of the first deformation, radially projecting or forming a recess with respect to it.

Advantageously, the first deformation may extend radially over the whole depth of the sipe.

The first deformation may comprise at least two undercut portions in a circumferential direction. Such undercut portions extend on opposite sides with respect to a plane perpendicular to the transverse wall of the block.

Preferably, the two undercut portions may extend radially over the whole depth of the transverse sipe.

In an embodiment, the two undercut portions may be connected with each other by the flat surface portion.

Preferably, the flat surface portion of the first deformation remains substantially at the same depth over the whole radial extension of the transverse sipe.

Conveniently, each transverse wall of the block of said at least one circumferential row may have two first deformations axially substantially in a side-by-side relationship.

Additionally, the two first deformations present on a transverse wall of the block may be oriented in opposite directions along a circumferential direction. In other words, the transverse wall of the block may have a first deformation projecting from the wall and a first deformation forming a recess in the wall.

Additionally, the first deformations located in a substantially corresponding position of two circumferentially consecutive sipes may be circumferentially oriented in a same direction.

Preferably, the tread band may have four circumferential rows of blocks in the central annular portion, the four circumferential rows of blocks being axially separated by circumferential grooves.

Conveniently, the tread band has a third circumferential groove astride the equatorial plane X-X.

Preferably, the tread band has two second circumferential grooves located on axially opposite sides with respect to the third circumferential groove and axially inside of said two first circumferential grooves.

Additionally, the third circumferential groove may have a "zigzag" course comprising a plurality of first inclined portions alternated with a plurality of second portions counter-inclined with respect to the first inclined portions.

Preferably, the blocks are elongate in the axial direction.

Conveniently, the blocks of a circumferential row are in circumferential locations staggered with respect to the blocks of the axially adjacent circumferential row.

Preferably, the tread band comprises a transverse sipe between each block of said four circumferential rows of blocks and the circumferentially consecutive block.

What has been described above with reference to the first and the second deformation of the walls of the central blocks may be repeated also for the blocks of the rows axially adjacent to the rows of central blocks.

According to another aspect thereof, the present invention relates to a tread band for a tyre for vehicle wheels, comprising a central annular portion (L1) astride an equatorial plane (X-X) and two shoulder annular portions (L2, L3), located on axially opposite sides with respect to the central annular portion (L1), the central annular portion being separated from each shoulder annular portion by a respective circumferential groove, wherein the central annular portion comprises a plurality of blocks, located in at least one circumferential row comprised between two circumferential grooves, and at least one transverse sipe adapted to define two circumferentially consecutive blocks.

What has been described above with reference to the tread band of the tyre of the first aspect of the invention may be repeated also for the tread band of the second aspect of the invention.

The tyre of the invention has an excellent behaviour when running on roads, both on dry and on wet ground, as well as good traction during its entire service life.

The excellent traction and directionality features of the tyre according to the present invention make the same particularly suitable to be mounted on traction wheels of heavy load vehicles.

Moreover, the tyre of the invention also has low rolling resistance and uniform wear features, which make the same also suitable to be mounted on wheels of heavy load vehicles characterised by a large use on motorways or highways.

Further features and advantages of the invention shall now be described with reference to embodiments shown, as a non-limiting example, in the accompanying figures, wherein:

### BRIEF DESCRIPTION OF THE DRAWINGS

- Fig. 1 shows a cross-sectional view of a first embodiment of the tyre according to the present invention;
- Fig. 2 shows a plan view of a first embodiment of a tread of the tyre according to the present invention;

- Figs 3 and 4 show perspective views of an embodiment of mutually constrainable block portions which can be used in the tread band of a tyre according to the invention;
- Figs 5a; 5b; 5c; 5d show cross-sectional views of the block portion of Fig. 3; and
- Fig. 6 shows an element usable in a mould in order to create, in the tread, sipes as in figure 2, and to shape the walls of the adjacent blocks as shown in figures 3 and 4.

### DETAILED DESCRIPTION OF EMBODIMENTS OF THE INVENTION

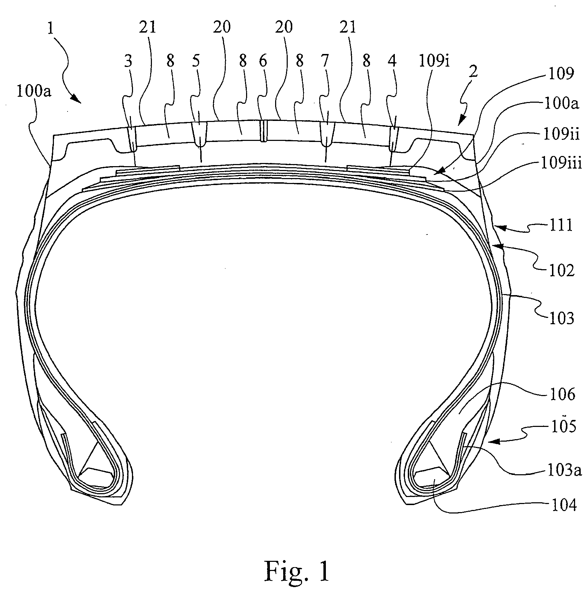

In figure 1 a tyre for vehicle wheels according to the present invention, in particular a tyre intended for traction or steering wheels of a heavy load vehicle, is generally indicated at 1.

In the following description and in the appended claims, by the expression: "heavy load vehicle" it is meant a vehicle belonging to classes M2∼M3, N2∼N3 and 02∼04 defined in "Consolidated Resolution of the Construction of Vehicles (R.E.3) (1997)", Annex 7, pages 52-59, "Classification and definition of power-driven vehicles and trailers", such as for example trucks, lorries, tractors, busses, vans and other vehicles of this kind.

The tyre 1 comprises a carcass structure 102, including at least one carcass ply 103, preferably two, formed by reinforcing cords, typically made of metal, incorporated into an elastomeric matrix.

The carcass ply 103 has opposite end edges 103a engaged with respective bead rings 104. The latter are located in regions 105 of the tyre 1 usually called "beads".

An elastomeric filling 106 taking up the space defined between the carcass ply 103 and the respective end edge 103a of the carcass ply 103 is applied onto the radially outer perimeter edge of the bead rings 104. The bead rings 104 hold the tyre 1 firmly fixed to an anchoring seat provided for this purpose in the wheel rim, thus preventing the bead 105 from coming out from such a seat during operation.

At the beads 105 specific reinforcing structures (not shown) may be provided, which have the function of improving the torque transmission to the tyre 1.

In a radially outer position with respect to the carcass ply 102 a belt structure 109 is provided, which preferably comprises several belt layers (three layers 109i, 109ii, 109iii are shown in this specific example) arranged radially one on top of the other and having reinforcing cords, typically made of metal, with a crossed orientation and/or substantially parallel with respect to the direction of circumferential development of the tyre 1.

A tread band 2, made as well of an elastomeric material, is applied in a radially outer position with respect to the belt structure 109.

On the lateral surfaces of the carcass structure 102 respective sidewalls 111 made of an elastomeric material are further applied, each extending from one of the opposite lateral edges 100a of the tread band 2 up to the respective annular structure 104 for the anchoring to the beads 105.

Referring to figures 1-2, the tread band 2 comprises a central portion L1 and two shoulder portions L2; L3.

The central portion L1, arranged astride the equatorial plane X-X, is visually separated from the shoulder portions L2; L3 by two first circumferential grooves 3, 4.

The first circumferential grooves 3, 4 are mainly provided for ensuring the drainage of water from the footprint area, particularly when the tyre is running on a straight path.

For this purpose, the first circumferential grooves 3, 4 may have a width greater than 2 mm. Preferably, the first circumferential grooves 3, 4 may have a width greater than 3 mm, in any case smaller than 20 mm, preferably smaller than 15 mm, for example equal to 7 mm.

Advantageously, the first circumferential grooves 3, 4 may have a depth greater than 10 mm, preferably greater than 15 mm, in any case smaller than 30 mm, for example equal to 18 mm.

The choice of providing the first circumferential grooves 3, 4 with a relevant depth allows good drainage features to be achieved.

More preferably, the first circumferential grooves 3, 4 do not have circumferentially a straight course, but a swerved one.

In other words, the first circumferential grooves 3, 4 preferably extend over the whole circumferential development of the tyre 1 with a course forming a broken line wherein there are first circumferential portions parallel to the equatorial plane X-X and second circumferential portions inclined with respect to the equatorial plane X-X. The second portions extend so as to join the said first portions. In this way, the traction of the tread band 2 in the advancing direction of the tyre is advantageously increased.

Moving axially toward the equatorial plane X-X, the tread band has second circumferential grooves 5, 7 located axially inside of the two first circumferential grooves 3, 4.

The second circumferential grooves 5, 7 may have a width greater than the first circumferential grooves 3, 4.

Preferably, the second circumferential grooves 5, 7 have a width greater than 2 mm. Preferably, the second circumferential grooves 5, 7 may have a width greater than 3 mm, in any case smaller than 25 mm, for example equal to 12 mm.

Advantageously, the second circumferential grooves 5, 7 may have a depth greater than 10 mm, preferably greater than 15 mm in any case smaller than 30 mm, for example equal to 18 mm.

The choice of providing the second circumferential grooves 5, 7 with a relevant depth and width allows good drainage features to be achieved.

More preferably, the second circumferential grooves 5, 7, as well as the first circumferential grooves 3, 4 do not have circumferentially a straight course, but a swerved one.

In other words, the second circumferential grooves 5, 7 preferably extend over the whole circumferential development of the tyre 1 with a course forming a broken line wherein there are first circumferential portions parallel to the equatorial plane X-X and second circumferential portions inclined with respect to the equatorial plane X-X, which join the said first portions with each other. In this way, the traction of the tread band 2 in the advancing direction of the tyre is advantageously increased.

A third circumferential groove 6 may be preferably located astride the equatorial plane X-X of the tyre.

The third circumferential groove 6 has a substantially "zigzag" course, comprising a plurality of first inclined portions 6a alternated with a plurality of second portions 6b counter-inclined with respect to the first inclined portions 6a.

Preferably, the maximum depth of the tread bad 2 (and thus the maximum depth of the circumferential grooves 3, 4, 5, 6, 7 and of the transverse sipes 8 described subsequently) is comprised between about 10 mm and about 25 mm, such a depth being more preferably equal to about 22 mm

The central portion L1 is designed so as to provide a low rolling resistance and wear evenness during the entre service life of the tyre.

In detail, in the embodiment shown in figures 1-2, the central portion L1 has four circumferential rows 9, 10, 11, 12 of blocks, two circumferential rows 9, 10 of central blocks 20 and two circumferential rows 11, 12 of lateral blocks 21.

The circumferential rows 11, 12 of lateral blocks 21 are located outside of the circumferential rows 9, 10 of central blocks, so that each circumferential row 11, respectively 12, of lateral blocks 21 is separated from a circumferential row 9, respectively 10, of central blocks by a circumferential groove 5, respectively 7.

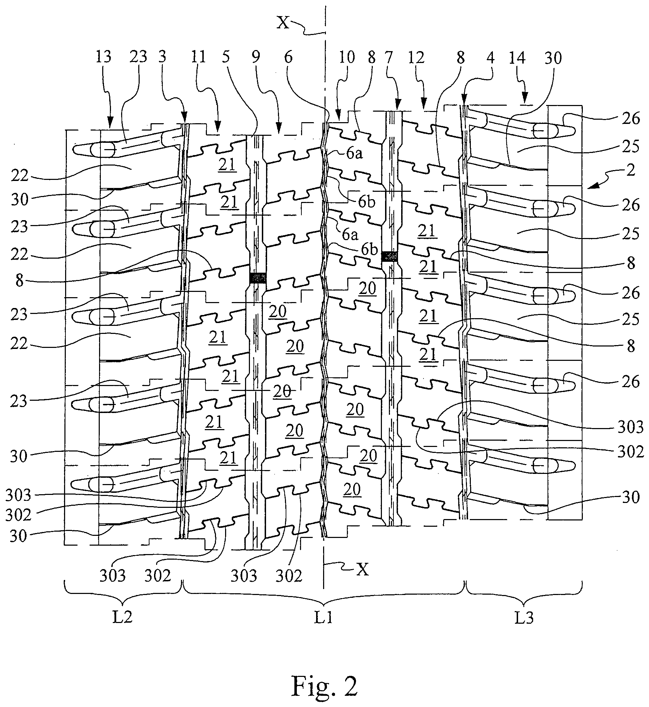

In the embodiment shown in figures 1, 2, the first circumferential row 11 of lateral blocks 21 is interposed between a first circumferential groove 3 and a second circumferential groove 5, whereas the second circumferential row 12 of lateral blocks 21 is interposed between a first circumferential groove 4 and a second circumferential groove 7.

In the embodiment of figures 1-2, the row 9 of central blocks 20 is thus interposed between a second circumferential groove 5 and the third circumferential groove 6.

Similarly, the central row 10 of central blocks 20 is interposed between a second circumferential groove 7 and the third circumferential groove 6.

Furthermore, the central blocks 20 of the first and second central circumferential rows 9, 10, as well as the blocks 21 of the first and second lateral circumferential rows 11, 12 are separated from one other in the circumferential direction by transverse sipes 8.

Preferably, in some embodiments such as the one shown in figures 1-2, the transverse sipes 8 of each circumferential row 9, 10, 11, 12 of central, respectively lateral, blocks 20, respectively 21, are not circumferentially aligned with the transverse sipes 8 of the circumferential rows of axially adjacent blocks, but they are circumferentially staggered with respect to them.

The transverse sipes 8 extend with an inclination with respect to the equatorial plane X-X of the tyre 1.

Preferably, the transverse sipes 8 of the circumferential rows 9, 10 of central blocks 20 have an inclination opposite to one other. Also the transverse sipes 8 of the circumferential rows 11, 12 of lateral blocks 21 have an inclination opposite to one another.

Additionally, the transverse sipes 8 of the circumferential row 9 of central blocks 20 have substantially the same inclination as the transverse sipes 8 of the lateral circumferential row 11 of lateral blocks 21, and the transverse sipes 8 of the circumferential row 10 of central blocks 20 have substantially the same inclination as the transverse sipes 8 of the lateral circumferential row 12 of lateral blocks 21.

In detail, the inclination angle of the transverse sipes 8 of the circumferential rows 9, 10, 11, 12 of central, respectively lateral, blocks 20, respectively 21, of the tread band 2 of figure 2 with respect to the equatorial plane X-X of the tyre 1 is in the range between 90° and 140° (as absolute value).

In the tread pattern of figure 2, the transverse sipes 8 of all of the circumferential rows of blocks 20, 21, except for the inclination described above, have the same shape. For the sake of a simple presentation and of reading convenience, in the rest of the present description the shape of such transverse sipes shall be described referring explicitly to the transverse sipes 8 of the circumferential row 9 of central blocks 20, being understood that what said holds also for the transverse sipes 8 of the remaining circumferential rows 10, 11, 12 of blocks of the central portion L1 of the tread band 2.

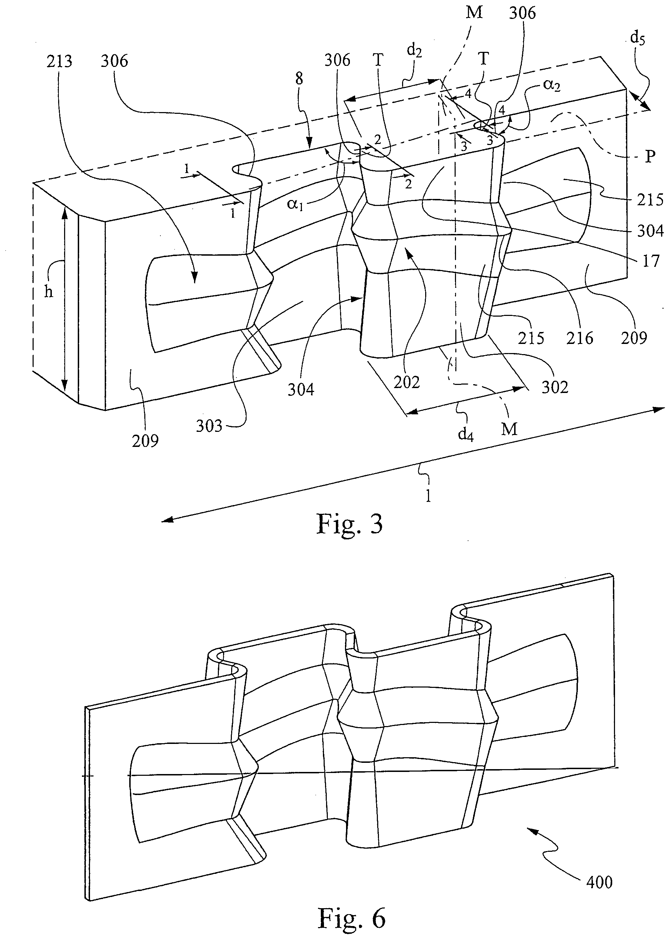

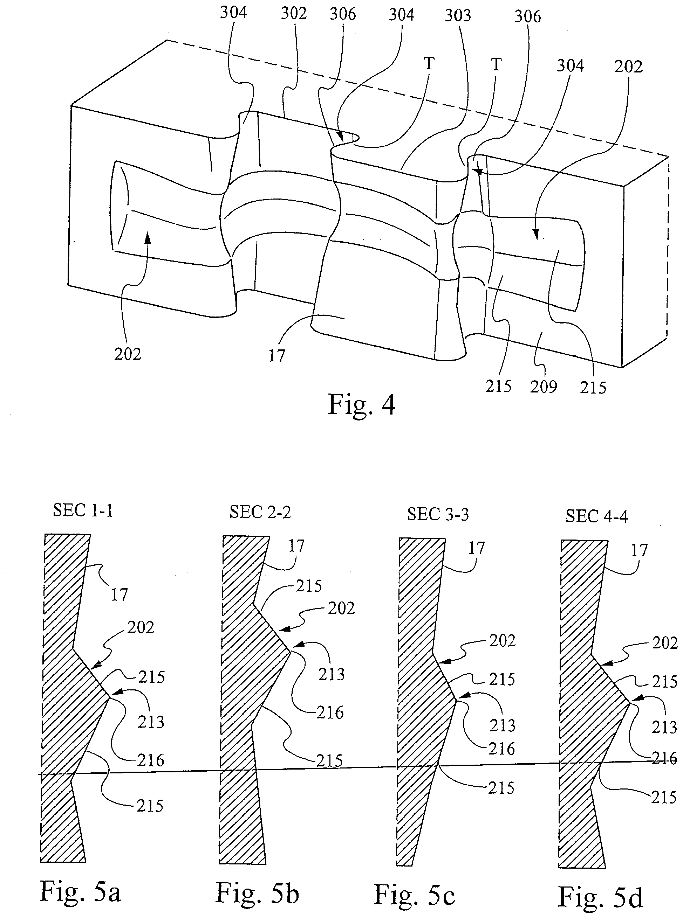

As can be seen particularly in figures 3 and 4, the block 20 defined by a transverse sipe 8 comprises a transverse wall 209 having a predetermined radial extension (or depth) h and a predetermined axial extension (or width) 1.

In the embodiment shown in the figures the axial extension (or width) 1 of the transverse wall 209 is the same as the axial extension of the sipe 8 itself.

Preferably, the depth h is comprised between 20% and 100% of the maximum depth of the tread band 2. The width 1 is preferably smaller than or equal to 55 mm.

The transverse wall 209 has at least one first deformation 302, 303 adapted to define, together with a block circumferentially adjacent and forming the sipe 8 itself, respective portions of mutual meshing or constraint.

In other words, the first deformation 302, 303 present on a first block 20, shown in figure 3, defines a first constraint with the corresponding first deformation 302, 303 present on the facing wall 209 of a second block 20 circumferentially adjacent to the first block 20, shown for example in figure 4. The first constraint is active at least in the circumferential direction. In other words, such a first constraint tends to hinder a separation in the circumferential direction of the first and the second block 20.

Preferably, in the embodiment shown in figures 3 and 4 each transverse wall 209 has two first deformations 302; 303 each adapted to interact with a corresponding first deformation 302, 303 present on the facing wall 209 of a second block 20 circumferentially adjacent to the first block 20 for defining in the two circumferentially adjacent blocks 20 respective portions of mutual meshing.

In detail, in the embodiment shown in figures 3 and 4 the two first deformations 302; 303 are arranged axially substantially in a side-by-side relationship.

The two first deformations 302; 303 present on the same transverse wall 209 of a block 20 may further be oriented in opposite directions along a circumferential direction. In other words, the transverse wall 209 of the block 20 may have a first deformation projecting from the wall 209 and a first deformation forming a recess in the wall 209.

Preferably, as shown in figure 2, the first deformations 302, 303 located in a substantially corresponding position of two pairs of circumferentially consecutive blocks 20 may be circumferentially oriented in a same direction.

Each deformation 302, 303 comprises two undercut portions 304 (in the circumferential direction) which extend on opposite sides with respect to a plane M perpendicular to the transverse wall 209 of the block 20.

More preferably, the two undercut portions 304 extend symmetrically in the axial direction with respect to said plane M.

The undercut portions 304 extend radially preferably over the whole radial extension of the transverse sipe 8.

The undercut portions 304 hinder, when leaving the footprint area of the tyre, the opening of the transverse sipe 8 beyond a certain limit. Such a limit is reached when, during the opening of the transverse sipe 8, i.e. while the blocks 20 which are circumferentially adjacent move away from each other, the meshing portions provided on a transverse wall 209 of a block 20 contact the meshing portions provided on the facing transverse wall 209 of the circumferentially adjacent block 20, mutually hindering themselves and preventing a further opening of the transverse sipe 8.

As shown in figures 3 and 4, each undercut portion 304 is preferably defined by a substantially S-shaped surface portion T, so as to avoid the presence of edges which would unavoidably cause undesired stress concentrations, uneven wear problems and problems in extracting the sipe from the mould.

Still referring to figures 3 and 4, the two undercut portions 304 comprise two lateral walls 306 inclined at respective angles α1 and α2 with respect to the main surface 109 of the sipe 8. Preferably, the angles α1 and α2 have a same width. More preferably, such a width is comprised between about 40° and 80°.

The lateral walls 306 are axially connected by a flat surface portion 17 substantially parallel to the transverse wall 209 of the block 20. In other words, moving from a radially outer end towards a radially inner end of the sipe 8, the distance d5 between the flat surface portion 17 and the transverse wall 209 of the block 20 remains substantially the same.

In other words, the flat surface portion 17 of the first deformation 302, 303 remains substantially at the same depth over the whole radial extension of the transverse sipe 8.

The first deformation 202, as well as the first deformation 303, is substantially puzzle-shaped.

Preferably, the first deformations 302, 303 extend radially over the whole depth of the transverse sipe 8.

The maximum width d4 of the first deformation 302, 303 is preferably comprised between about 5 mm and about 40 mm and varies moving from a radially outer end toward a radially inner end of the transverse sipe 8. The width d2 between the two lateral walls 306 at the wall of the block 209 has a value preferably comprised between about 30% and 90% of the maximum width d4.

In an embodiment, the maximum width d4 of the first deformation 302, 303 decreases moving radially from the radially outer end toward the radially inner end of the transverse sipe 8.

According to a relevant aspect of the present invention, at least one transverse sipe 8 has, on at least one of the opposite transverse walls 209 facing the transverse sipe 8, at least one second deformation 202 adapted to define in the circumferentially adjacent blocks 20 further respective portions of mutual constraint.

In detail, the second deformation 202 present on a first block 20 defines a second constraint with a corresponding second deformation 202 present on the facing wall of a second block 20 circumferentially adjacent to the first block 20. The second constraint acts at least in the radial direction.

In other words, such a second constraint tends to hinder the mutual sliding in the radial direction of the facing transverse walls 209 of the first and the second block 20.

Preferably, the second deformation 202 extends at least on a first deformation 302 or 303 so that the first 302, 303 and the second 202 deformation are at the same wall portion of the block 20.

Preferably, the second deformation 202 extends axially on both of the first deformations 302, 303 of the same transverse sipe 8. In the embodiment shown in figures 3 and 4, the second deformation 202 extends axially in a range comprised between about 30% and 80% of the transverse wall 209 of the block 20.

The second deformation 202 extends axially so as to follow a course located at different radial depths.

Preferably, the second deformation 202 extends axially over the whole extension of the flat surface portion 17 of the first deformation 302; 303, radially projecting or forming a recess with respect to it.

The second deformation 202 may comprise at least one ridge 213, for example defined by at least two inclined portions 215 opposed to each other so as to form substantially a vertex 216.

Alternatively, the two inclined portions 215 could converge to a rounded end without departing from the scope of protection of the present invention.

The ridge 213, as the second deformation 202, extends axially at least on a first deformation 302, 303, preferably on both of the first deformations 302, 303, even more preferably in a range comprised between about 30% and 80% of the axial extension of the transverse wall 209.

The ridge 213 extends so as to follow a course located at different radial depths. In other words, moving axially from an axially outer end toward the remaining axially outer end of the transverse wall 209, it is noted that the ridge 213, and particularly its vertex 216, is positioned at different radial depths.

As an example, in figures 5a-5d four different cross sections of portions of the block 20, taken at different axial positions 1-1; 2-2; 3-3; 4-4 of the second deformation 202 shown in figure 3, are shown.

As shown, the ridge 213, and particularly its vertex 216, is located at different radial depths. In detail, as apparent from figures 5a-5d, the ridge 213 is positioned at a radial depth that is smaller at the axially most central portion of the transverse wall 209 of the block 20, represented in figure 5b, cross section 2-2, than at the axially outermost portions of figs 5a, 5d, 5c.

Preferably, in an axially central portion of the transverse wall 209 of the block 20, the ridge 213 of the second deformation 202 is located at a radially outer position with respect to the half of the maximum radial depth h of the sipe 8.

Conveniently, in the said axially central portion the ridge 213 of the second deformation 202 may be located at a radial depth less than about 40% of the maximum depth h of the transverse sipe 8.

Advantageously, the said axially central portion of the block 20 has an axial extension equal to about 20% of the axial extension of the whole transverse wall 209 of the block 20.

At an undercut portion 304 (see figure 5c, cross section 3-3), the ridge 213 is substantially located at a radially inner, and thus less blocking, position compared to the ridge 213 at the said axially most central portion of the transverse sipe 8.

Such a choice is determined by the synergistic effect in this location between the constraint portion of the first deformation 302 and the constraint portion of the ridge 213.

In other words, in the axially most central portion of the sipe 8 the second deformation 202 is located not much deeply, so as to lock, when entering in and leaving the footprint area, the adjacent central blocks 20 at the region where they have a greater mobility, i.e. at the radially outermost surfaces.

Outside said axially central portion of the transverse wall 209 of the block 20, the ridge 213 is located at a radial depth comprised between about 30% and 70% of the maximum depth h of the transverse sipe 8.

The choice of such a course of the second deformation 202, particularly of its ridge 213, improves the interaction between the opposite walls of the central adjacent blocks 20 in the footprint area. In fact, on the one hand a greater meshing between the opposite walls of the adjacent blocks 20 is provided in the region where this is more required, on the other hand predetermined regions where the synergistic effect with the first deformation 302, 303 makes the mutual meshing less necessary, or regions where excessively hindering the sliding of opposite walls would cause a decay of the tyre performances, are left freer.

For not excessively hindering the radial sliding of the opposite transverse walls 209 of the two circumferentially adjacent blocks 20, separated by the transverse sipe 8, the second deformation 202 preferably has a width less than about 30% of the maximum depth h of the transverse 8.

Furthermore, in the embodiment shown in figures 3-5 it can be noted that moving axially from an axially outer end of the transverse wall 209 to the remaining end, the second deformation 202, particularly its ridge 213, does not have a constant depth, but a variable one.

The variable depth of the ridge 213 improves the operation of the blocks in the footprint area, particularly as regards the displacement thereof in the circumferential and/or radial direction.

In order to provide a greater locking against the radial sliding of the opposite walls of two adjacent central blocks 20 defined by a transverse sipe 8, preferably the depth of the second deformation 202 and of its ridge 213 is greater at the axially most central portion of the transverse wall 209 of the block 20, compared to the depth at the axially outermost portions.

The regions of the sipes 8 where the opposite transverse walls 209 of the adjacent blocks 20 are more mobile are thus further locked by a meshing with a more relevant extension.

For the sake of completeness, in figure 6 there is shown a preferred embodiment of an element 400, which may be arranged in a mould or creating in the tyre the transverse sipe 8, shown in figure 2, and is adapted to shape the walls 209 of adjacent blocks 20 as shown in figures 3 and 4.

As known, in the manufacturing cycle of a tyre it is contemplated that, after a building process in which a green tyre is obtained, a moulding and curing process is carried out aimed at stabilizing the tyre structure according to a desired geometric conformation, usually characterised by a particular tread pattern.

During the moulding and curing operation, the green tyre is pushed against the inner walls of the mould cavity and stabilized in the geometric configuration imparted to it, further to the cross-linking.

In this step, the green tyre interacts also with the element 400 for creating in the tread band 2 of the tyre the transverse sipe 8.

Coming again to the tread band 2, as far as the shoulder portions L2, L3 are concerned, in the embodiment shown in figure 2 the shoulder portion L2 has a row 13 of shoulder blocks comprising a plurality of shoulder blocks 22 separated from one another by shoulder transverse grooves 23.

Similarly, in the embodiment shown in figure 2 the shoulder portion L3 has a row 14 of shoulder blocks comprising a plurality of shoulder blocks 25 separated from each other by shoulder transverse grooves 26.

The shoulder blocks 27 of row 14 are preferably arranged circumferentially staggered with respect to the shoulder blocks 22 of row 13.

In the tread pattern of figure 2, the rows 13, respectively 14, of blocks are substantially identical, leaving out the inclination of the transverse grooves 23, respectively 26. For the sake of a simple presentation and of reading convenience, in the rest of the present description the circumferential row 13 of shoulder blocks 23 shall be described, being understood that what said holds also for the circumferential row 14 of shoulder blocks 25 of the lateral portion L3 of the tread band 2.

The shoulder transverse grooves 23 have substantially a constant width, and even more preferably a width comprised between 14 mm and 28 mm, for example equal to 22 mm.

The shoulder transverse grooves 23 extend along an inclined direction with respect to the equatorial plane X-X, adapted to form an angle α3 with the equatorial plane X-X.

Preferably, the transverse grooves 23 form with the equatorial plane X-X an angle α3 smaller than 90°, preferably greater than 15°, for example equal to about 75°.

The shoulder transverse grooves 23 have a depth reduction at their axially most central portion so as to define a double-step course.

Preferably, at the depth reduction the shoulder transverse grooves 23 have a depth smaller than 10 mm.

The choice of keeping the depth of the transverse grooves 23 small in the axially most central portion allows a greater strength against lateral and torsional stresses to be ensured.

In order to increase traction on snow-covered roads and drainage on wet roads, the shoulder blocks 22, 25 may be provided with sipes 30, as in the case shown in figures 1-3.

The sipes 30 may have a depth comprised between 1 and 5 mm, for example equal to 2 mm, and a width comprised between 0 and 2 mm.

The present invention has been described with reference to some embodiments thereof. Many modifications can be made in the embodiments described in detail, still remaining within the scope of protection of the invention, defined by the following claims.

## Claims

1. Tyre (1) having a tread (2) comprising a central annular portion (L1) astride an equatorial plane (X-X) and two shoulder annular portions (L2, L3), located on axially opposite sides with respect to the central annular portion (L1), the central annular portion being separated from each shoulder annular portion by a respective first circumferential groove (3, 4), wherein the central annular portion (L1) comprises a plurality of blocks (20, 21), arranged in at least one circumferential row comprised between two circumferential grooves (3, 4, 5, 6, 7), and at least one sipe (8) adapted to separate two circumferentially consecutive blocks (20, 21); each block being circumferentially delimited, by means of two consecutive sipes (8), by two opposite walls extending with a substantially transverse course with respect to the equatorial plane (X-X) of the tyre (1) and with a substantially radial course from the bottom of the sipe (8) to the radially outermost surface of the block (20, 21); on at least one of the opposite transverse walls of a block (20, 21) being present at least one first deformation (302; 303) adapted to define together with at least one adjacent block (20; 21) first portions of mutual constraint;
the said at least one first deformation (302, 303) present on a first block (20, 21) defining a first constraint with a corresponding first deformation (302, 303) present on the facing wall of a second block (20, 21) circumferentially adjacent to the first block (20, 21); said first constraint acting at least in a circumferential direction;
- on at least one of the opposite transverse walls (209) of a block (20, 21) at least one second deformation (202) is present which is adapted to define in the adjacent blocks (20, 21) further respective portions of mutual constraint;
- said second deformation (202) present on a first block (20, 21) defines a second constraint with a corresponding second deformation (202) present on the facing wall of a second block (20, 21) circumferentially adjacent to the said first block (20, 21), said second constraint acting at least in a radial direction;
- said second deformation (202) extends at least on the said first deformation (302; 303) so that the first and second deformations are at the same wall portion of the block;
**characterized in that**
- said second deformation (202) extends axially so as to follow a course located at different radial depths of the sipe (8);
- said second deformation (202) extends axially in a range comprised between about 30% and 80% of the transverse wall (209) of the block (20).

2. Tyre (1) according to claim 1, wherein the first deformation has a width smaller than the total extension of the substantially transverse wall.

3. Tyre (1) according to claim 1 or 2, wherein said second deformation (202) has a width less than 30% of the maximum depth (h) of the sipe (8).

4. Tyre (1) according to anyone of the previous claims, wherein in an axially central portion of the wall of the block, a ridge (213) of the second deformation (202) is located in a radially outer position with respect to the half of the maximum radial depth of the sipe (8).

5. Tyre (1) according to claim 4, wherein said axially central portion of the block has an axial extension equal to about 20% of the axial extension of the whole transverse wall of the block.

6. Tyre (1) according to anyone of the previous claims 4 to 5, wherein outside said axially central portion of the wall of the block, the ridge (213) of the second deformation (202) is located at a radial depth comprised between 30% and 70% of the maximum depth (h) of the sipe (8).

7. Tyre (1) according to anyone of the previous claims, wherein the second deformation (202) has a variable depth along its course.

8. Tyre (1) according to claim 7, wherein the depth of the second deformation (202) is greater at the axially central portion of the transverse wall (209) of the block (20, 21), compared to the depth of the second deformation (202) at the axially outermost portions.

9. Tyre (1) according to anyone of the previous claims, wherein the second deformation (202) has a variable width along its course.

10. Tyre (1) according to anyone of the previous claims 4 to 9, wherein the ridge (213) of the second deformation (202) is defined by at least two inclined portions (214; 215) opposed to each other so as to form substantially a vertex (216).

11. Tyre (1) according to anyone of the previous claims, wherein the first deformation (302; 303) extends radially over the whole depth of the sipe (8).

12. Tyre (1) according to anyone of the previous claims, wherein said first deformation (302, 303) has a flat surface portion (17).

13. Tyre (1) according to claim 12, wherein the second deformation (202) extends axially over the whole extension of the flat surface portion (17) of the first deformation (302; 303), radially projecting or forming a recess with respect to it.

14. Tyre (1) according to anyone of the previous claims, wherein said at least one first deformation (302, 303) comprises at least two undercut portions (304) in a circumferential direction, said undercut portions extending on opposite sides with respect to a plane perpendicular to the transverse wall of the block (20, 21).

15. Tyre (1) according to claim 14, wherein said at least two undercut portions (304) extend radially over the whole depth of the transverse sipe (8).

16. Tyre (1) according to anyone of the previous claims, wherein each transverse wall of the block (20, 21) of said at least one circumferential row has two first deformations (302, 303) axially substantially in a side-by-side relationship.

17. Tyre (1) according to claim 16, wherein said two first deformations (302, 303) present on a transverse wall of the block are oriented in opposite directions along a circumferential direction.

18. Tyre (1) according to anyone of the previous claims, wherein the first deformations (302, 303) located in a substantially corresponding position of two circumferentially consecutive sipes (8) may be circumferentially oriented in a same direction.

19. Tyre (1) according to anyone of the previous claims, wherein said tread band (2) comprises four circumferential rows (9, 10, 11, 12) of blocks (20, 21) in said central annular portion (L1), said circumferential rows (9, 10, 11, 12) of blocks (20, 21) being axially separated by circumferential grooves (3; 4; 5; 6, 7).

20. Tyre (1) according to claim 19, comprising a third circumferential groove (6) astride said equatorial plane (X-X) and two second circumferential grooves (5; 7) located on axially opposite sides with respect to the third circumferential groove (6) and axially inside of said two first circumferential grooves (3; 4).

21. Tyre (1) according to claim 20, wherein said third circumferential groove (6) has a "zigzag" course comprising a plurality of first inclined portions (6a) alternated with a plurality of second portions (6b) counter-inclined with respect to the said first inclined portions (6a).

22. Tyre (1) according to anyone of the previous claims, wherein the blocks (20) are elongate in axial direction.

23. Tyre (1) according to anyone of the claims 19 to 22, wherein the blocks (20) of a circumferential row are in circumferential locations staggered with respect to the blocks (20) of the axially adjacent circumferential row.

24. Tyre (1) according to anyone of the previous claims, comprising a sipe (8) between each block of said four circumferential rows of blocks and the circumferentially consecutive block.

25. Tread band for a tyre for vehicle wheels, comprising a central annular portion (L1) astride an equatorial plane (X-X) and two shoulder annular portions (L2, L3), located on axially opposite sides with respect to the central annular portion (L1), the central annular portion being separated from each shoulder annular portion by a respective circumferential groove (3, 4), wherein the central annular portion (L1) comprises a plurality of blocks (20, 21), located in at least one circumferential row comprised between two circumferential grooves (3, 4, 5, 6, 7), and at least one sipe (8) adapted to separate two circumferentially consecutive blocks (20, 21) ; each block being circumferentially delimited, by means of two consecutive sipes (8), by two opposite walls extending with a substantially transverse course with respect to the equatorial plane (X-X) of the tyre (1) and with a substantially radial course from the bottom of the sipe (8) to the radially outermost surface of the block (20, 21); on at least one of the opposite transverse walls of a block (20, 21) being present at least one first deformation (302; 303) adapted to define together with at least one adjacent block (20; 21) first portions of mutual constraint;
the said at least one first deformation (302, 303) present on a first block (20, 21) defining a first constraint with a corresponding first deformation (302, 303) present on the facing wall of a second block (20, 21) circumferentially adjacent to the first block (20, 21); said first constraint acting at least in a circumferential direction;
- on at least one of the opposite transverse walls of a block (20, 21) at least one second deformation (202) is present which is adapted to define in the adjacent blocks (20, 21) further respective portions of mutual constraint;
- said second deformation (202) present on a first block (20, 21) defines a second constraint with a corresponding second deformation (202) present on the facing wall of a second block (20, 21) circumferentially adjacent to the said first block (20, 21), said second constraint acting at least in a radial direction;
- said second deformation (202) extends at least on the said first deformation (302; 303) so that the first and second deformations are at the same wall portion of the block;
**characterized in that**
- said second deformation (202) extends axially so as to follow a course located at different radial depths of the sipe (8);
- said second deformation (202) extends axially in a range comprised between about 30% and 80% of the transverse wall (209) of the block (20).

## Patentansprüche

1. Reifen (1) mit einer Lauffläche (2) umfassend einen zentralen ringförmigen Abschnitt (L1) zu beiden Seiten einer Äquatorialebene (X-X) und zwei ringförmige Schulterabschnitte (L2, L3), die sich auf axial entgegengesetzten Seiten in Bezug auf den zentralen ringförmigen Abschnitt (L1) befinden, wobei der zentrale ringförmige Abschnitt von jedem ringförmigen Schulterabschnitt durch eine jeweilige erste umlaufende Nut (3, 4) getrennt ist, wobei der zentrale ringförmige Abschnitt (L1) eine Vielzahl von Blöcken (20, 21) umfasst, die in zumindest einer umlaufenden Reihe angeordnet sind, die zwischen zwei umlaufenden Nuten (3, 4, 5, 6, 7) liegt, und zumindest eine Lamelle (8), die dazu geeignet ist, zwei in Umfangsrichtung aufeinander folgende Blöcke (20, 21) zu trennen; wobei jeder Block in Umfangsrichtung mittels zweier aufeinander folgender Lamellen (8) begrenzt ist, durch zwei entgegengesetzte Wände, die sich mit einem im Wesentlichen querverlaufenden Verlauf in Bezug auf die Äquatorialebene (X-X) des Reifens (1) und mit einem im Wesentlichen radialen Verlauf von dem Boden der Lamelle (8) zu der radial äußersten Oberfläche des Blocks (20, 21) erstrecken; wobei an zumindest einer der entgegengesetzten Querwände eines Blocks (20, 21) zumindest eine erste Verformung (302; 303) vorhanden ist, die dazu geeignet ist, zusammen mit zumindest einem benachbarten Block (20; 21) erste Abschnitte gegenseitiger Begrenzung zu definieren;
wobei die zumindest eine erste Verformung (302, 303), die an einem ersten Block (20, 21) vorhanden ist, eine erste Begrenzung mit einer entsprechenden ersten Verformung (302, 303) definiert, die an der zugewandten Wand eines zweiten Blocks (20, 21) vorhanden ist, der zu dem ersten Block (20, 21) in Umfangsrichtung benachbart ist; wobei die erste Begrenzung zumindest in einer Umfangsrichtung wirkt;
- wobei an zumindest einer der entgegengesetzten Querwände (209) eines Blocks (20, 21) zumindest eine zweite Verformung (202) vorhanden ist, die dazu geeignet ist, in den benachbarten Blöcken (20, 21) weitere jeweilige Abschnitte gegenseitiger Begrenzung zu definieren;
- wobei die zweite Verformung (202), die an einem ersten Block (20, 21) vorhanden ist , eine zweite Begrenzung mit einer entsprechenden zweiten Verformung (202) definiert, die an der zugewandten Wand eines zweiten Blocks (20, 21) vorhanden ist, der zu dem ersten Block (20, 21) in Umfangsrichtung benachbart ist; wobei die zweite Begrenzung zumindest in einer Radialrichtung wirkt;
- wobei die zweite Verformung (202) sich zumindest an der ersten Verformung (302; 303) erstreckt, so dass die erste und zweite Verformung sich an demselben Wandabschnitt des Blocks befinden;
**dadurch gekennzeichnet, dass**
- die zweite Verformung (202) sich axial so erstreckt, dass sie einem Verlauf folgt, der sich an unterschiedlichen radialen Tiefen der Lamelle (8) befindet;
- die zweite Verformung (202) sich axial in einem Bereich erstreckt, der zwischen etwa 30 % und 80 % der Querwand (209) des Blocks (20) umfasst ist.

2. Reifen (1) nach Anspruch 1, wobei die erste Verformung eine Breite aufweist, die geringer als die Gesamterstreckung der im Wesentlichen querverlaufenden Wand ist.

3. Reifen (1) nach Anspruch 1 oder 2, wobei die zweite Verformung (202) eine Breite aufweist, die geringer als 30 % der maximalen Tiefe (h) der Lamelle (8) ist.

4. Reifen (1) nach einem der vorhergehenden Ansprüche, wobei in einem axial zentralen Abschnitt der Wand des Blocks ein Kamm (213) der zweiten Verformung (202) sich in einer radial äußeren Position in Bezug auf die Hälfte der maximalen radialen Tiefe der Lamelle (8) befindet.

5. Reifen (1) nach Anspruch 4, wobei der axial zentrale Abschnitt des Blocks eine axiale Erstreckung aufweist, die gleich etwa 20 % der axialen Erstreckung der gesamten Querwand des Blocks ist.

6. Reifen (1) nach einem der vorhergehenden Ansprüche 4 bis 5, wobei außerhalb des axial zentralen Abschnitts der Wand des Blocks der Kamm (213) der zweiten Verformung (202) sich an einer radialen Tiefe befindet, die zwischen 30 % und 70 % der maximalen Tiefe (h) der Lamelle (8) umfasst ist.

7. Reifen (1) nach einem der vorhergehenden Ansprüche, wobei die zweite Verformung (202) eine variable Tiefe entlang ihres Verlaufs aufweist.

8. Reifen (1) nach Anspruch 7, wobei die Tiefe der zweiten Verformung (202) an dem axial zentralen Abschnitt der Querwand (209) des Blocks (20, 21) im Vergleich zu der Tiefe der zweiten Verformung (202) an den axial äußersten Abschnitten größer ist.

9. Reifen (1) nach einem der vorhergehenden Ansprüche, wobei die zweite Verformung (202) eine variable Breite entlang ihres Verlaufs aufweist.

10. Reifen (1) nach einem der vorhergehenden Ansprüche 4 bis 9, wobei der Kamm (213) der zweiten Verformung (202) durch zumindest zwei schräge Abschnitte (214; 215) definiert ist, die einander so entgegengesetzt sind, dass sie im Wesentlichen einen Scheitelpunkt (216) bilden.

11. Reifen (1) nach einem der vorhergehenden Ansprüche, wobei die erste Verformung (302; 303) sich radial über die gesamte Tiefe der Lamelle (8) erstreckt.

12. Reifen (1) nach einem der vorhergehenden Ansprüche, wobei die erste Verformung (302, 303) einen flachen Oberflächenabschnitt (17) aufweist.

13. Reifen (1) nach Anspruch 12, wobei die zweite Verformung (202) sich axial über die gesamte Erstreckung des flachen Oberflächenabschnitts (17) der ersten Verformung (302; 303) erstreckt, wobei sie sich in Bezug dazu radial erstreckt oder eine Ausnehmung damit ausbildet.

14. Reifen (1) nach einem der vorhergehenden Ansprüche, wobei die zumindest eine erste Verformung (302, 303) zumindest zwei Unterschneidungsabschnitte (304) in einer Umfangsrichtung umfasst, wobei die Unterschneidungsabschnitte sich an entgegengesetzten Seiten in Bezug auf eine Ebene senkrecht zur Querwand des Blocks (20, 21) erstrecken.

15. Reifen (1) nach Anspruch 14, wobei die zumindest zwei Unterschneidungsabschnitte (304) sich radial über die gesamte Tiefe der querverlaufenden Lamelle (8) erstrecken.

16. Reifen (1) nach einem der vorhergehenden Ansprüche, wobei jede Querwand des Blocks (20, 21) der zumindest einen umlaufenden Reihe zwei erste Verformungen (302, 303) aufweist, die axial im Wesentlichen in einer Beziehung Seite an Seite liegen.

17. Reifen (1) nach Anspruch 16, wobei die zwei ersten Verformungen (302, 303), die an einer Querwand des Blocks vorhanden sind, in entgegengesetzte Richtungen entlang einer Umfangsrichtung orientiert sind.

18. Reifen (1) nach einem der vorhergehenden Ansprüche, wobei die ersten Verformungen (302, 303), die sich in einer im Wesentlichen entsprechenden Position zweier in Umfangsrichtung aufeinander folgender Lamellen (8) befinden, in Umfangsrichtung in derselben Richtung orientiert sein können.

19. Reifen (1) nach einem der vorhergehenden Ansprüche, wobei der Laufflächenring (2) vier umlaufende Reihen (9, 10, 11, 12) von Blöcken (20, 21) in dem zentralen ringförmigen Abschnitt (L1) umfasst, wobei die umlaufenden Reihen (9, 10, 11, 12) von Blöcken (20, 21) axial durch umlaufende Nuten (3; 4; 5; 6, 7) getrennt sind.

20. Reifen (1) nach Anspruch 19, umfassend eine dritte umlaufende Nut (6) zu beiden Seiten der Äquatorialebene (X-X) und zwei zweite umlaufende Nuten (5; 7), die sich an axial entgegengesetzten Seiten in Bezug auf die dritte umlaufende Nut (6) und axial innerhalb der zwei ersten umlaufenden Nuten (3; 4) befinden.

21. Reifen (1) nach Anspruch 20, wobei die dritte umlaufende Nut (6) einen "Zickzack"-Verlauf aufweist, der eine Vielzahl von ersten schrägen Abschnitten (6a) umfasst, die sich mit einer Vielzahl von zweiten Abschnitten (6b) abwechseln, die in Bezug auf die ersten schrägen Abschnitte (6a) entgegengesetzt schräg sind.

22. Reifen (1) nach einem der vorhergehenden Ansprüche, wobei die Blöcke (20) in axialer Richtung verlängert sind.

23. Reifen (1) nach einem der Ansprüche 19 bis 22, wobei die Blöcke (20) einer umlaufenden Reihe in Positionen in Umfangsrichtung in Bezug auf die Blöcke (20) der axial benachbarten umlaufenden Reihe versetzt sind.

24. Reifen (1) nach einem der vorhergehenden Ansprüche, umfassend eine Lamelle (8) zwischen jedem Block der vier umlaufenden Reihen von Blöcken und dem in Umfangsrichtung folgenden Block.

25. Laufflächenring für einen Reifen für Fahrzeugräder, umfassend einen zentralen ringförmigen Abschnitt (L1) zu beiden Seiten einer Äquatorialebene (X-X) und zwei ringförmige Schulterabschnitte (L2, L3), die sich auf axial entgegengesetzten Seiten in Bezug auf den zentralen ringförmigen Abschnitt (L1) befinden, wobei der zentrale ringförmige Abschnitt von jedem ringförmigen Schulterabschnitt durch eine jeweilige erste umlaufende Nut (3, 4) getrennt ist, wobei der zentrale ringförmige Abschnitt (L1) eine Vielzahl von Blöcken (20, 21) umfasst, die sich in zumindest einer umlaufenden Reihe befinden, die zwischen zwei umlaufenden Nuten (3, 4, 5, 6, 7) liegt, und zumindest eine Lamelle (8), die dazu geeignet ist, zwei in Umfangsrichtung aufeinander folgende Blöcke (20, 21) zu trennen; wobei jeder Block in Umfangsrichtung mittels zweier aufeinander folgender Lamellen (8) begrenzt ist, durch zwei entgegengesetzte Wände, die sich mit einem im Wesentlichen querverlaufenden Verlauf in Bezug auf die Äquatorialebene (X-X) des Reifens (1) und mit einem im Wesentlichen radialen Verlauf von dem Boden der Lamelle (8) zu der radial äußersten Oberfläche des Blocks (20, 21) erstrecken; wobei an zumindest einer der entgegengesetzten Querwände eines Blocks (20, 21) zumindest eine erste Verformung (302; 303) vorhanden ist, die dazu geeignet ist, zusammen mit zumindest einem benachbarten Block (20; 21) erste Abschnitte gegenseitiger Einschränkung zu definieren;
wobei die zumindest eine erste Verformung (302, 303), die an einem ersten Block (20, 21) vorhanden ist, eine erste Begrenzung mit einer entsprechenden ersten Verformung (302, 303) definiert, die an der zugewandten Wand eines zweiten Blocks (20, 21) vorhanden ist, der zu dem ersten Block (20, 21) in Umfangsrichtung benachbart ist;
wobei die erste Begrenzung zumindest in einer Umfangsrichtung wirkt;
- wobei an zumindest einer der entgegengesetzten Querwände (20) eines Blocks (21, 202) zumindest eine zweite Verformung (20) vorhanden ist, die dazu geeignet ist, in den benachbarten Blöcken (21, 21) weitere jeweilige Abschnitte gegenseitiger Begrenzung zu definieren;
- wobei die zweite Verformung (202), die an einem ersten Block (20, 21) vorhanden ist, eine zweite Begrenzung mit einer entsprechenden zweiten Verformung (202) definiert, die an der zugewandten Wand eines zweiten Blocks (20, 21) vorhanden ist, der zu dem ersten Block (20, 21) in Umfangsrichtung benachbart ist; wobei die zweite Begrenzung zumindest in einer Radialrichtung wirkt;
- wobei die zweite Verformung (202) sich zumindest an der ersten Verformung (302; 303) erstreckt, so dass die erste und zweite Verformung sich an demselben Wandabschnitt des Blocks befinden;
**dadurch gekennzeichnet, dass**
- die zweite Verformung (202) sich axial so erstreckt, dass sie einem Verlauf folgt, der sich an unterschiedlichen radialen Tiefen der Lamelle (8) befindet;
- die zweite Verformung (202) sich axial in einem Bereich erstreckt, der zwischen etwa 30 % und 80 % der Querwand (209) des Blocks (20) umfasst ist.

## Revendications

1. Pneu (1) ayant une bande de roulement (2) comprenant une partie annulaire centrale (L1) à califourchon sur un plan équatorial (XX) et deux parties annulaires d'épaulement (L2, L3), situées sur des côtés axialement opposés par rapport à la partie annulaire centrale (L1), la partie annulaire centrale étant séparée de chaque partie annulaire d'épaulement par une première rainure circonférentielle respective (3, 4), où la partie annulaire centrale (L1) comprend une pluralité de blocs (20, 21) agencés dans au moins une rangée circonférentielle comprise entre deux rainures circonférentielles (3, 4, 5, 6, 7) et au moins une lamelle (8) adaptée pour séparer deux blocs qui se suivent le long de la circonférence (20, 21) ; chaque bloc étant délimité de manière circonférentielle, au moyen de deux lamelles consécutives (8), par deux parois opposées s'étendant selon un parcours sensiblement transversal par rapport au plan équatorial (X-X) du pneu (1) et selon un parcours sensiblement radial depuis la partie inférieure de la lamelle (8) jusqu'à la surface radialement la plus à l'extérieur du bloc (20, 21) ; sur au moins l'une des parois transversales opposées d'un bloc (20, 21), se trouve au moins une première déformation (302 ; 303) adaptée pour définir conjointement avec au moins un bloc adjacent (20 ; 21) des premières parties de contrainte mutuelle ;
ladite au moins une première déformation (302, 303) présente sur un premier bloc (20, 21) définissant une première contrainte avec une première déformation correspondante (302, 303) présente sur la paroi frontale d'un deuxième bloc (20, 21) adjacent de manière circonférentielle au premier bloc (20, 21) ; ladite première contrainte agissant au moins dans une direction circonférentielle ;
- sur au moins l'une des parois transversales opposées (209) d'un bloc (20, 21), se trouve au moins une deuxième déformation (202) qui est adaptée pour définir dans les blocs adjacents (20, 21) d'autres parties respectives de contrainte mutuelle ;
- ladite deuxième déformation (202) présente sur un premier bloc (20, 21) définit une deuxième contrainte avec une deuxième déformation correspondante (202) présente sur la paroi frontale d'un deuxième bloc (20, 21) adjacent de manière circonférentielle audit premier bloc (20, 21), ladite deuxième contrainte agissant au moins dans une direction radiale ;
- ladite deuxième déformation (202) s'étend au moins sur ladite première déformation (302 ; 303) de sorte que les première et deuxième déformations se trouvent au niveau de la même partie de paroi du bloc ;
**caractérisé en ce que**
- ladite deuxième déformation (202) s'étend axialement de manière à suivre un parcours situé à différentes profondeurs radiales de la lamelle (8) ;
- ladite deuxième déformation (202) s'étend axialement dans une plage comprise entre environ 30% et 80% de la paroi transversale (209) du bloc (20).

2. Pneu (1) selon la revendication 1, dans lequel la première déformation a une largeur inférieure à l'extension totale de la paroi sensiblement transversale.

3. Pneu (1) selon la revendication 1 ou 2, dans lequel ladite deuxième déformation (202) a une largeur inférieure à 30% de la profondeur maximale (h) de la lamelle (8).

4. Pneu (1) selon l'une quelconque des revendications précédentes, dans lequel, dans une partie axialement centrale de la paroi du bloc, une crête (213) de la deuxième déformation (202) est située dans une position radialement extérieure par rapport à la moitié de la profondeur radiale maximale de la lamelle (8).

5. Pneu (1) selon la revendication 4, dans lequel ladite partie axialement centrale du bloc a une extension axiale égale à environ 20% de l'extension axiale de la paroi transversale totale du bloc.

6. Pneu (1) selon l'une quelconque des revendications précédentes 4 et 5, dans lequel, à l'extérieur de ladite partie axialement centrale de la paroi du bloc, la crête (213) de la deuxième déformation (202) est située à une profondeur radiale comprise entre 30% et 70% de la profondeur maximale (h) de la lamelle (8).

7. Pneu (1) selon l'une quelconque des revendications précédentes, dans lequel la deuxième déformation (202) a une profondeur variable tout au long de son parcours.

8. Pneu (1) selon la revendication 7, dans lequel la profondeur de la deuxième déformation (202) est supérieure au niveau de la partie axialement centrale de la paroi transversale (209) du bloc (20, 21), par rapport à la profondeur de la deuxième déformation (202) au niveau des parties axialement les plus à l'extérieur.

9. Pneu (1) selon l'une quelconque des revendications précédentes, dans lequel la deuxième déformation (202) présente une largeur variable tout au long de son parcours.

10. Pneu (1) selon l'une quelconque des revendications précédentes 4 à 9, dans lequel la crête (213) de la deuxième déformation (202) est définie par au moins deux parties inclinées (214 ; 215) opposées l'une à l'autre de manière à former sensiblement un sommet (216).

11. Pneu (1) selon l'une quelconque des revendications précédentes, dans lequel la première déformation (302 ; 303) s'étend radialement sur toute la profondeur de la lamelle (8).

12. Pneu (1) selon l'une quelconque des revendications précédentes, dans lequel ladite première déformation (302, 303) présente une partie de surface plate (17).

13. Pneu (1) selon la revendication 12, dans lequel la deuxième déformation (202) s'étend axialement sur toute l'extension de la partie de surface plate (17) de la première déformation (302 ; 303), faisant saillie radialement ou formant un évidement par rapport à celle-ci.

14. Pneu (1) selon l'une quelconque des revendications précédentes, dans lequel ladite au moins une première déformation (302, 303) comprend au moins deux parties de contre-dépouille (304) dans une direction circonférentielle, lesdites parties de contre-dépouille s'étendant sur des côtés opposés par rapport à un plan perpendiculaire à la paroi transversale du bloc (20, 21).

15. Pneu (1) selon la revendication 14, dans lequel lesdites au moins deux parties de contre-dépouille (304) s'étendent radialement sur toute la profondeur de la lamelle transversale (8).

16. Pneu (1) selon l'une quelconque des revendications précédentes,
dans lequel chaque paroi transversale du bloc (20, 21) de ladite au moins une rangée circonférentielle a deux premières déformations (302, 303) sensiblement axialement côte à côte.

17. Pneu (1) selon la revendication 16, dans lequel lesdites deux premières déformations (302, 303) présentes sur une paroi transversale du bloc sont orientées dans des directions opposées le long d'une direction circonférentielle.

18. Pneu (1) selon l'une quelconque des revendications précédentes, dans lequel les premières déformations (302, 303) situées dans une position sensiblement correspondante de deux lamelles consécutives qui se suivent le long de la circonférence (8) peuvent être orientées de manière circonférentielle dans une même direction.

19. Pneu (1) selon l'une quelconque des revendications précédentes, dans lequel ladite bande de roulement (2) comprend quatre rangées circonférentielles (9, 10, 11, 12) de blocs (20, 21) dans ladite partie annulaire centrale (L1), lesdites rangées circonférentielles (9, 10, 11, 12) de blocs (20, 21) étant séparées axialement par des rainures circonférentielles (3 ; 4 ; 5 ; 6, 7).

20. Pneu (1) selon la revendication 19, comprenant une troisième rainure circonférentielle (6) à califourchon sur ledit plan équatorial (X-X) et deux deuxièmes rainures circonférentielles (5 ; 7) situées sur des côtés axialement opposés par rapport à la troisième rainure circonférentielle (6) et axialement à l'intérieur desdites deux premières rainures circonférentielles (3 ; 4).

21. Pneu (1) selon la revendication 20, dans lequel ladite troisième rainure circonférentielle (6) a un parcours en "zigzag" comprenant une pluralité de premières parties inclinées (6a) qui alternent avec une pluralité de deuxièmes parties (6b) inclinées en sens opposé par rapport auxdites premières parties inclinées (6a).

22. Pneu (1) selon l'une quelconque des revendications précédentes, dans lequel les blocs (20) sont allongés dans la direction axiale.

23. Pneu (1) selon l'une quelconque des revendications 19 à 22, dans lequel les blocs (20) d'une rangée circonférentielle se trouvent dans des emplacements circonférentiels décalés par rapport aux blocs (20) de la rangée circonférentielle axialement adjacente.

24. Pneu (1) selon l'une quelconque des revendications précédentes, comprenant une lamelle (8) entre chaque bloc desdites quatre rangées circonférentielles de blocs et le bloc qui suit le long de la circonférence.

25. Bande de roulement pour un pneu pour roues de véhicule, comprenant une partie annulaire centrale (L1) à califourchon sur un plan équatorial (XX) et deux parties annulaires d'épaulement (L2, L3), situées sur des côtés axialement opposés par rapport à la partie annulaire centrale (L1), la partie annulaire centrale étant séparée de chaque partie annulaire d'épaulement par une rainure circonférentielle respective (3, 4), où la partie annulaire centrale (L1) comprend une pluralité de blocs (20, 21), situés dans au moins une rangée circonférentielle comprise entre deux rainures circonférentielles (3, 4, 5, 6, 7), et au moins une lamelle (8) adaptée pour séparer deux blocs qui se suivent le long de la circonférence (20, 21) ; chaque bloc étant délimité de manière circonférentielle, au moyen de deux lamelles consécutives (8), par deux parois opposées s'étendant selon un parcours sensiblement transversal par rapport au plan équatorial (X-X) du pneu (1) et selon un parcours sensiblement radial depuis la partie inférieure de la lamelle (8) jusqu'à la surface radialement la plus à l'extérieur du bloc (20, 21) ; sur au moins l'une des parois transversales opposées d'un bloc (20, 21), se trouve au moins une première déformation (302 ; 303) adaptée pour définir conjointement avec au moins un bloc adjacent (20 ; 21) des premières parties de contrainte mutuelle ;
ladite au moins une première déformation (302, 303) présente sur un premier bloc (20, 21) définissant une première contrainte avec une première déformation correspondante (302, 303) présente sur la paroi frontale d'un deuxième bloc (20, 21) adjacent de manière circonférentielle au premier bloc (20, 21) ; ladite première contrainte agissant au moins dans une direction circonférentielle ;
- sur au moins l'une des parois transversales opposées d'un bloc (20, 21), se trouve au moins une deuxième déformation (202) qui est adaptée pour définir dans les blocs adjacents (20, 21) d'autres parties respectives de contrainte mutuelle ;
- ladite deuxième déformation (202) présente sur un premier bloc (20, 21) définit une deuxième contrainte avec une deuxième déformation correspondante (202) présente sur la paroi frontale d'un deuxième bloc (20, 21) adjacent de manière circonférentielle audit premier bloc (20, 21), ladite deuxième contrainte agissant au moins dans une direction radiale ;
- ladite deuxième déformation (202) s'étend au moins sur ladite première déformation (302 ; 303) de sorte que les première et deuxième déformations se trouvent au niveau de la même partie de paroi du bloc ;
**caractérisée en ce que**
- ladite deuxième déformation (202) s'étend axialement de manière à suivre un parcours situé à différentes profondeurs radiales de la lamelle (8) ;
- ladite deuxième déformation (202) s'étend axialement dans une plage comprise entre environ 30% et 80% de la paroi transversale (209) du bloc (20).
